# EUROPEAN PATENT SPECIFICATION

(11) **EP 2 518 819 B1**
(45) Date of publication and mention of the grant of the patent: **17.12.2014**
(21) Application number: 12165367.9
(22) Date of filing: 24.04.2012
(51) Int. Cl.: H01M 12/08, H01M 10/0562, H01M 10/0525, H01M 10/0565, H01M 10/0566

(54) **Negative electrode for lithium secondary battery, method of manufacturing the same, and lithium secondary battery employing the same**
Negative Elektrode für eine Lithiumsekundärbatterie, Herstellungsverfahren dafür und Lithiumsekundärbatterie damit
Électrode négative pour batterie secondaire au lithium, son procédé de fabrication et batterie secondaire au lithium l'utilisant

(30) Priority: 29.04.2011 KR 20110040974
(43) Date of publication of application: 31.10.2012
(73) Proprietor: Samsung Electronics Co., Ltd., Suwon-si, Gyeonggi-do, 443-742 (KR); National University Corporation Mie University, Tsu City Mie 514-8507 (JP)
(72) Inventor: Im, Dong-min, Yongin-si (KR); Lee, Dong-joon, Yongin-si (KR); Takeda, Yasuo, Tsu City, Mie 514-8507 (JP); Yamamoto, Osamu, Tsu City, Mie 514-8507 (JP); Imanishi, Nobuyuki, Tsu City, Mie 514-8507 (JP)
(74) Representative: Zijlstra, Robert Wiebo Johan

(56) References cited:
- EP-A1- 1 049 188
- US-A1- 2007 172 739
- US-B1- 6 730 440

## Description

### BACKGROUND OF THE INVENTION

Aspects of the present disclosure relate to negative electrodes for a lithium secondary battery, methods of manufacturing the same, and lithium secondary batteries employing the same, and more particularly, to negative electrodes for a lithium secondary battery that include an organic-inorganic hybrid protective layer, methods of manufacturing the same, and lithium secondary batteries employing the same.

### 2. Description of the Related Art

A lithium metal negative electrode has a theoretical electrical capacitance of about 3860 mAh/g. The theoretical electrical capacitance of the lithium metal negative electrode is about 10 times higher than a theoretical electrical capacitance of a graphite negative electrode typically used in current lithium secondary batteries, which is about 372 mAh/g. A lithium metal negative electrode has been considered as a negative electrode for next generation lithium secondary batteries.

However, when lithium metal is used as a negative electrode, there are problems that charge and discharge reversibility is decreased by dendritic growth on the surface of a lithium metal negative electrode during charging and discharging, and that charge and discharge reversibility is decreased by a reaction with liquid electrolyte to increase the surface resistance and deteriorate the uniformity of the reaction.

In addition, a chemical species eluted from the positive electrode or reaction products of positive electrode with electrolyte, or a reaction of a positive electrode active material with the negative electrode may deteriorate the performance of a battery.

In order to address these problems, inorganic protective layers of lithium ion conducting ceramics into which liquid electrolyte may not permeate are widely used. An inorganic protective layer is formed on the surface of a lithium negative electrode to prevent positive electrode or electrolyte components from reacting with lithium the negative electrolyte and to prevent an electrical short with the positive electrode even though dendrites are formed on the surface of the lithium negative electrode.

However, when inorganic protective layers of lithium ion conducting ceramics are manufactured by using a method, such as tape casting, doctor blade, etc., there is a need for improving the inorganic protective layers because a small number of pores are present through which liquid components in the electrolyte or impurities from the external environment slowly permeate.

US 2007/0172739 A1 discloses a composite solid electrolyte include a monolithic solid electrolyte base component that is a continuous matrix of an inorganic active metal ion conductor and a filler component used to eliminate through porosity in the solid electrolyte.

EP 1 049 188 A1 discloses a glass-ceramic composite electrolyte including a medium containing glass-ceramic powder impregnated with a non-aqueous electrolytic solution.

US 6,730,440 B1 discloses a composite comprising at least one separator layer which comprises a mixture comprising a mix consisting of 1 to 95% by weight of a solid having a primary particle size of from 5 nm to 20 µm; and 5 to 99% by weight of a polymeric composition, at least one cathode layer which comprises an electron-conducting, electrochemically active compound which is able to release lithium ions on charging, and at least one anode layer which comprises an electron-conducting, electrochemical compound which is able to take up lithium ions on charging.

### SUMMARY OF THE INVENTION

Aspects of the present invention provide negative electrodes for a lithium secondary battery that include an organic-inorganic hybrid protective layer.

Aspects of the present invention provide methods of manufacturing a negative electrode for a lithium secondary battery that includes the organic-inorganic hybrid protective layer.

Aspects of the present invention provide lithium secondary batteries employing the negative electrode.

Aspects of the present invention provide lithium air batteries employing a negative electrode including the organic-inorganic hybrid protective layer.

According to an aspect of the present invention, a negative electrode for a lithium secondary battery includes a collector; a negative electrode active material layer disposed on the collector; and an organic-inorganic hybrid protective layer disposed on the negative electrode active material layer, wherein the lithium ion conductivity of a polymer included in the organic-inorganic hybrid protective layer is about 10⁻⁴ S/cm or less.

The organic-inorganic hybrid protective layer may include a lithium ion conductive porous ceramic and a polymer, wherein the polymer is an epoxy resin that is the polymerization product of 1,3-phenylenediamine and 2,2-bis(4-glycidyloxyphenyl)propane or of 1,4-diaminobutane and 2,2-bis(4-glycidyloxyphenyl)propane.

The polymer may be chemically bonded to at least one portion of pores included in the porous ceramic.

The chemical bond may include a structure represented by the following general formulas (1) to (3).

-P-O- (1)

-CH₂-O- (2)

-P-O-CH₂- (3)

The organic-inorganic hybrid protective layer may have a polymer disposed inside a framework consisting of a lithium ion conductive porous ceramic.

The framework may be a formed as single-body.

The polymer may be a thermosetting resin.

The polymer may include an amount of about 0.01 to about 20 parts by weight based on 100 parts of the organic-inorganic hybrid protective layer.

The lithium ion conductive porous ceramic may include at least one ceramic selected from the group consisting of a Lithium-Super-Ion-Conductor (LISICON) structure, a perovskite structure, and a garnet structure.

The organic-inorganic hybrid protective layer may have a thickness of about 100 nm to about 500 µm.

A lithium ion conductive intermediate layer may be further included between the negative electrode active material layer and the organic-inorganic hybrid protective layer.

The negative electrode active material layer may include a negative electrode active material of at least one metal selected from the group consisting of lithium metal or an alloy of lithium and aluminum, tin, magnesium, indium, calcium, titanium, and vanadium.

According to another aspect of the present invention, a method of manufacturing a negative electrode for a lithium secondary battery includes preparing a lithium ion conductive porous ceramic layer; injecting a solution including a monomer of a thermosetting resin into pores of the ceramic layer; and polymerizing the monomer to form an organic-inorganic hybrid protective layer of the lithium ion conductive porous ceramic and a polymer.

The preparation of the lithium ion conductive porous ceramic layer may include (a) mixing and sintering a ceramic precursor to obtain a ceramic powder; and (b) pressurizing and sintering the ceramic powder to prepare a lithium ion conductive porous ceramic layer.

The ceramic precursor may include mixing two or more oxides, nitrates, carbonates, hydroxides, or phosphorus oxides selected from the group consisting of a lithium salt and an alkali metal, an alkaline earth metal, a lanthanum metal, Al, Ga, In, Zr, Ti, Ge, Co, W, Mo, Sn, Si, Mn, Ni, Ga, Nb, and Ta.

The ceramic precursor may further include NH₄H₂PO₄.

The monomer of the thermosetting resin may be added in an amount of about 0.01 to about 20 parts by weight based on 100 parts by weight of the ceramic layer in the injection of the solution including the monomer of the thermosetting resin.

A cross-linking agent may be further included in the solution including the monomer of the thermosetting resin.

The monomer may be polymerized at about 10°C to about 300°C.

According to another aspect of the present invention, a lithium secondary battery includes the negative electrode described above.

According to another aspect of the present invention, a lithium air battery includes a positive electrode using oxygen as a positive electrode active material; an aqueous or non-aqueous electrolyte; a negative electrode active material layer made of a lithium metal or lithium alloy; and the negative electrode described above.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a schematic view illustrating permeation inhibition effects of an organic-inorganic hybrid protective layer against an electrolyte or impurities according to an embodiment of the present invention;
FIG. 2 is an exploded perspective view of a lithium secondary battery according to an embodiment of the present invention;
FIG. 3 is a schematic view of a lithium air battery according to an embodiment of the present invention;
FIG. 4 is a Scanning Electron Microscopy (SEM) photo of an organic-inorganic hybrid protective layer according to Example 1;
FIG. 5 is a SEM photo of a ceramic-based inorganic protective layer according to Comparative Example 1;
FIG. 6 is a graph showing an evaluation result of negative ion permeation properties according to Example 1; and
FIG. 7 is a graph showing an evaluation result of negative ion permeation properties according to Comparative Example 1.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

Hereinafter, a negative electrode for a lithium secondary battery, a method of manufacturing the same, and a lithium secondary battery employing the same according to embodiments of the present invention will be described in detail. It should be borne in mind that these are provided by way of explanation and illustration and that the present invention is not limited thereby.

An aspect of the present invention provides a negative electrode for a lithium secondary battery including a collector; a negative electrode active material layer disposed on the collector; and an organic-inorganic hybrid protective layer disposed on the negative electrode active material layer, wherein the lithium ion conductivity of a polymer included in the organic-inorganic hybrid protective layer is about 10⁻⁴ S/cm or less.

When the negative electrode for a lithium secondary battery includes an organic-inorganic hybrid protective layer disposed on the negative electrode active material, the small number of permeable pores may be filled with a polymer to inhibit the permeation of impurities through pores and cracks, compared to the case where a ceramic-based inorganic protective layer is included.

The lithium ion conductivity of the polymer included in the organic-inorganic hybrid protective layer may be about 10⁻⁴ S/ cm or less, for example, about 10⁻³⁰ S/ cm to about 10⁻⁴ S/ cm, for example, about 10⁻¹⁵ S/ cm to about 10⁻⁵ S/ cm, and for example, about 10⁻¹⁵ S/ cm to about 10⁻⁶ S/ cm.

When the lithium ion conductivity of the polymer is within these ranges, the permeation of impurities through pores and cracks may be inhibited.

However, when a polymer layer disposed between a ceramic-based inorganic protective layer and liquid electrolyte has a multi-layer structure, lithium ions may be easily transferred between the ceramic-based inorganic protective layer and liquid electrolyte and thus the lithium ion conductivity of the polymer layer included in a multi-layer structure may be higher than that of the polymer included in the organic-inorganic hybrid protective layer.

The organic-inorganic hybrid protective layer may include a lithium ion conductive porous ceramic and a polymer.

The polymer may be chemically bonded to at least one portion of the ceramic pores.

The polymer may be chemically bonded to at least one portion of the ceramic pores to form a chemically stable and strong protective layer.

The chemical bond may include, for example, a structure represented by the following general formulas (1) to (3).

-P-O- (1)

-CH₂-O- (2)

-P-O-CH₂- (3)

The chemical bond may be formed by a dipole-dipole interaction. For example, a structure presented by the general formula (3) may be formed when an oxygen atom of -P-O-, which may be present on the surface of a lithium ion conductive porous ceramic and has a high electronegativity, attacks a carbon atom with a low electronegativity in an epoxy group included in an epoxy resin. The structure may also include a structure represented by the general formulas (1) and (2).

In addition, the chemical bond which is present in at least one portion of the polymer and the ceramic pores may be a hydrogen bond. For example, a hydrogen-mediated hydrogen bond may be formed between an oxygen atom of -P-O-, which may be present on the surface of a lithium ion conductive porous ceramic, and nitrogen and oxygen atoms included in an epoxy resin.

The organic-inorganic hybrid protective layer may have a polymer disposed inside a framework consisting of a lithium ion conductive porous ceramic.

The framework may be formed as a single-body.

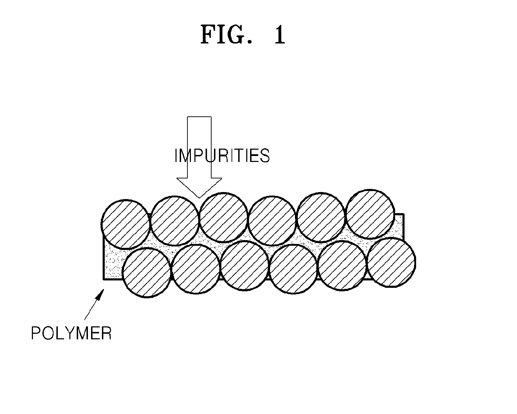

FIG. 1 is a schematic view illustrating permeation inhibition effects of an organic-inorganic hybrid protective layeragainst an electrolyte or impurities according to an embodiment of the present invention. Referring to FIG. 1, the organic-inorganic hybrid protective layer may have a polymer disposed inside a framework consisting of a lithium ion conductive porous ceramic, and the framework may be formed as a single-body to inhibit permeation of electrolyte or impurities effectively.

The polymer may be a thermosetting resin.

The polymer includes at least one resin selected from the group consisting of an epoxy resin that is the polymerization product of 1,3-phenylenediamine and 2,2-bis(4-glycidyloxyphenyl)propane or of 1,4-diaminobutane and 2,2-bis(4-glycidyloxyphenyl)propane.

The polymer may be included in the organic-inorganic hybrid protective layer to form a protective layer with a high density due to a decrease in volume during polymerization of the polymer.

However, a polymer included in a multi-layer structure, in which a polymer layer is disposed between a ceramic-based inorganic protective layer and liquid electrolyte, is a polymer in which at the polymer layer is disposed adjacent to the electrolyte interface to have flexible properties.

The polymer may be present in an amount of about 0.01 to about 20 parts by weight based on 100 parts by weight of the organic-inorganic hybrid protective layer, and for example, in an amount of about 0.01 to about 10 parts by weight.

When the amount of the polymer is present within these ranges, an organic-inorganic hybrid protective layer including the polymer may inhibit permeation of liquid components in electrolyte or impurities, and lithium ion conductivity may also be maintained in a lithium secondary battery employing a negative electrode including the same.

The lithium ion conductive porous ceramic may include at least one ceramic selected from the group consisting of a Lithium-Super-Ion-Conductor (LISICON) structure, a perovskite structure, and a garnet structure.

The lithium ion conductive porous ceramic allows lithium ions to pass through, and may be included in an organic-inorganic hybrid protective layer disposed on a negative electrode active material layer to prevent a positive electrode or electrolyte components from reacting with negative electrolyte and to prevent an electrical short with the positive electrode even though dendrites are formed on the surface of the negative electrode.

When the chemical stability of the lithium ion conductive porous ceramic is considered, the lithium ion conductive porous ceramic may include at least one compound selected from the group consisting of Chemical Formulae 1 through 7 set out below. However, it is not limited thereto, and all the lithium ion conductive porous ceramics of LISICON structure, a perovskite structure, or a garnet structure are possible.

<Chemical Formula 1> Li₁₊ₓAlₓTi₂₋ₓM_{α} (PO_{4+β})₃

wherein 0< x <0.5, 0≤ a ≤ 0.1, 0 ≤ β ≤ 0.1, and M is Zr, Hf, or Rf.

<Chemical Formula 2> Li_{1+x+4y}AlₓTi_{1-x-y} (PO₄)₃

wherein 0 < x < 0.5 and 0 < y < 0.5.

<Chemical Formula 3> Li_{1+x+4y}AlₓTi₂₋ₓSi_{y}P_{3-y}O₁₂

wherein 0 ≤ x ≤ 1 and 0 ≤ y ≤ 1.

<Chemical Formula 4> Li₂₊₂ₓZn₁₋ₓGeO₄

wherein -0.3 < x < 0.9.

<Chemical Formula 5> (LiₓC_{y})D_{z}O₃

wherein the average oxidation number of D is 5 when that of LiₓC_{y} is 1, C is an alkali metal element, and 0 ≤ x ≤ 1, 0 ≤ y ≤ 1, and 0.5 ≤ z ≤ 1.5;
the average oxidation number of D is 4 when that of LiₓC_{y} is 2, C is an alkaline earth metal element or Pb, and 0 ≤ x ≤ 1.5, 0 ≤ y ≤ 1.2, and 0.5 ≤ z ≤ 1.5;
the average oxidation number of D is 3 when that of LiₓC_{y} is 3, C is a lanthanum metal element, and 0 ≤ x ≤ 1.5, 0 ≤ y ≤ 1.2, and 0.5 ≤ z ≤ 1.5; and
D is at least one metal selected from the group consisting of Al, Co, W, Mo, Sn, Si, Mn, Ni, Ti, Zr, Ga, Nb, and Ta.

<Chemical Formula 6> X₃Z₂(TO₄)₃

wherein X is Ca, Fe, or Mg; Z is Fe, Al, or Cr; and T is Si, As, Ge, Ga, Al, V, or Fe.

<Chemical Formula 7> AₓB_{y}C_{z}O₁₂

wherein 5 < x < 12, 2.5 < y < 3.5, and 1.5 < z < 2.5; A is an alkali metal; B is at least one metal selected from the group consisting of Ca, Sr, Ba, and La; and C is at least one metal selected from the group consisting of Nb, Zr, and Ta.

The organic-inorganic hybrid protective layer may have a thickness of about 100 nm to about 500 µm, for example, about 1µm to about 300 µm, and for example, about 10 µm to about 280 µm.

When the organic-inorganic hybrid protective layer has a thickness within these ranges, the permeation of liquid components of an electrolyte or impurities may be inhibited and lithium ion conductivity is maintained to provide a negative electrode with improved stability.

A lithium ion conductive intermediate layer may be further included between the negative electrode active material layer and the organic-inorganic hybrid protective layer.

The lithium ion conductive intermediate layer may include, for example, at least one material selected from the group consisting of a lithium ion conductive liquid electrolyte, a polymer electrolyte, and a gel electrolyte.

The lithium ion conductive intermediate layer may function to facilitate the movement of lithium ions between the negative electrode active material layer and the organic-inorganic hybrid protective layer.

The lithium ion conductive liquid electrolyte may be, for example, a non-aqueous electrolyte. The non-aqueous electrolyte may be an organic solvent which does not include water, and the non-aqueous electrolyte may include a carbonate-based solvent, an ester-based solvent, an ether-based solvent, a ketone-based solvent, an organosulfur solvent, an organophosphorus solvent, or an aprotic solvent.

The carbonate-based solvent may include dimethyl carbonate (DMC), diethyl carbonate (DEC), ethyl methyl carbonate (also known as methyl ethyl carbonate, EMC and MEC), di-n-propyl carbonate (DPC), methyl n-propyl carbonate (MPC), ethyl n-propyl carbonate (EPC), , ethylene carbonate (EC), propylene carbonate (PC), fluoroethylene carbonate (FEC), butylene carbonate (BC), and the like, and the ester-based solvent may include methyl acetate, ethyl acetate, n-propyl acetate, tert-butyl acetate, methyl n-propionate, ethyl n-propionate, γ-butyrolactone, 5-decanolide, γ-valerolactone, *dl*-mevalonolactone, γ-caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone, and the like. In addition, the organosulfur and organophosphorus solvents solvent may include methanesulfonyl chloride, p-trichloro-n-dichlorophosphorylmonophosphazene, and the like, and the aprotic solvent may include nitriles such as R-CN (R is a linear, branched or cyclic C2 to C20 hydrocarbon group and may include a double bond aromatic ring or an ether bond), amides such as dimethylformamide, and the like, dioxolane sulfolanes such as 1,3-dioxolane, and the like.

The non-aqueous organic solvents may be used alone or in combination. If one or more are used in combination, the mixture ratio may be appropriately controlled according to the desired battery performance, which may be known to those of ordinary skill in the art. The non-aqueous organic solvent may include a lithium salt, and the lithium salt may be dissolved in an organic solvent to act as a supplier of lithium ions in a battery. The lithium salt may include one or more selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiF, LiBr, LiCl, Lil, and LiB(C₂O₄)₂(lithium bis(oxalato) borate; LiBOB). The concentration of the lithium salt may be about 0.1 M to about 2.0 M. When the concentration of the lithium salt is within this range, the electrolyte has appropriate conductivity and viscosity and thus has excellent electrolyte performance and lithium ions may move efficiently. In addition to the lithium salt, the non-aqueous organic solvent may further include other metal salts, for example, AlCl₃, MgCl₂, NaCl, KCI, NaBr, KBr, CaCl₂, and the like.

The polymer electrolyte may be, for example, polyethylene oxide doped with a lithium salt, and the lithium salt may includeLiBF₄, LiPF₆, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlCl₄, and the like.

The gel electrolyte is one in which a non-aqueous organic solvent and a lithium salt are mixed in a polymer, and for example, the polymer may include polyacrylonitrile-polyvinyl alcohol (PAN-PVA)-based, poly(methyl methacrylate) (PMMA)-based, polyvinyl pyrrolidone (PVP)-based, polyethylene oxide (PEO) cross-linking type, and polyvinyl chloride (PVC)-based polymers, the non-aqueous organic solvent may include carbonates such as ethylene carbonate, propylene carbonate, and the like, having a high boiling point and a high relative permittivity, and the lithium salt may include a lithium salt of the polymer electrolyte described above.

Another aspect of the present invention provides a method of manufacturing a negative electrode for a lithium secondary battery, the method including: preparing a lithium ion conductive porous ceramic layer; injecting a solution including a monomer of a thermosetting resin into pores of the lithium ion conductive porous ceramic layer; and polymerizing the monomer to form an organic-inorganic hybrid protective layer of the lithium ion conductive porous ceramic and a polymer.

The preparation of the lithium ion conductive porous layer may include (a) mixing and sintering a ceramic precursor to obtain a ceramic powder; and (b) pressurizing and sintering the ceramic powder to prepare a lithium ion conductive porous ceramic layer.

The mixing and sintering of the ceramic precursor to obtain a ceramic powder may include, for example, grinding the ceramic precursor by mortar or ball-milling, and the like for mixing.

The ceramic precursor may include two or more oxides, nitrates, carbonates, hydroxides, or phosphorus oxides selected from the group consisting of a lithium salt and an alkali metal, an alkaline earth metal, a lanthanum metal, Al, Ga, Zr, Ti, Ge, Co, W, Mo, Si, Sn, Mn, Ni, Fe, Cr, As, Nb, and Ta.

The ceramic precursor may include, for example, Li₂CO₃, Al(NO₃)₃, TiO₂, SiO₂, GeO₂, Al(PO₃)₃, Nb₂O₅, Ta₂O₅, and the like.

The ceramic precursor may further include NH₄H₂PO₄.

Then, the mixture is subjected to sintering at about 400°C to about 1300°C in an electric furnace for 2 to 20 hrs, for example, at about 800°C to about 1200°C for 2 to 10 hrs to produce a ceramic powder.

Subsequently, the pressurizing and sintering of the ceramic powder to prepare a lithium ion conductive porous ceramic layer is performed.

For example, the ceramic powder is ground, pressurized by using a doctor blade, and followed by sintering at about 800°C to about 1200°C for 30 min to 10 hrs, for example, at about 900°C to about 1100°C for 30 min to 2 hrs to prepare a conductive porous ceramic layer.

Next, the mixing of the monomer of the thermosetting resin is performed.

The monomer of the thermosetting resin includes at least one material selected from the group consisting of an epoxy resin monomer of 1,3-phenylenediamine and 2,2-bis(4-glycidyloxyphenyl)propane; or an epoxy resin monomer of 1,4-diaminobutane and 2,2-bis(4-glycidyloxyphenyl)propane.

The epoxy resin monomer of 1,3-phenylenediamine and 2,2-bis(4-glycidyloxyphenyl)propane may be mixed in a molar ratio of, for example, about 0.8 to about 1.2, and in a molar ratio of, for example, 1:1.
Next, the injection of the solution including the monomer of the thermosetting resin is performed.

In the injection of the solution including the monomer of the thermosetting resin, the monomer of the thermosetting resin may be added in an amount of about 0.01 to about 20 parts by weight based on 100 parts by weight of the conductive porous ceramic layer.
When the amount of the monomer of the thermosetting resin is present within these ranges, an organic-inorganic hybrid protective layer of a lithium ion conductive porous ceramic and a polymer may be formed in which the movement of impurities, etc. is effectively inhibited thus maintaining lithium ion conductivity,.

A solution including the monomer of the thermosetting resin may further include a cross-linking agent.

The cross-linking agent may include at least one acrylate selected from the group consisting of, for example, methyl methacrylate, aryl acrylate, benzyl acrylate, butoxyethyl acrylate, 2-cyanoethyl acrylate, cyclohexyl acrylate, dicyclopentenyl acrylate, N,N-diethylaminoethyl acrylate, 2-ethoxyethyl acrylate, 2-ethylhexyl acrylate, glycerol methacrylate, and glycidyl methacrylate, but it is not limited thereto.

The monomer may be polymerized at a temperature of, for example, about 10°C to about 300°C, and for example, about 20°C to about 150°C.

The monomer may be polymerized within these temperature ranges to form a crosslinkable polymer, and an organic-inorganic hybrid protective layer with high density may be formed by a decrease in volume during polymerization.

In addition, a thermal polymerization initiator may be used during polymerization. For example, the thermal polymerization initiator may include azoisobisbutyronitrile, benzoyl peroxide, acetyl peroxide, or lauroyl peroxide, but it is not limited thereto.

Another aspect of the present invention provides a lithium secondary battery including the negative electrode described above.

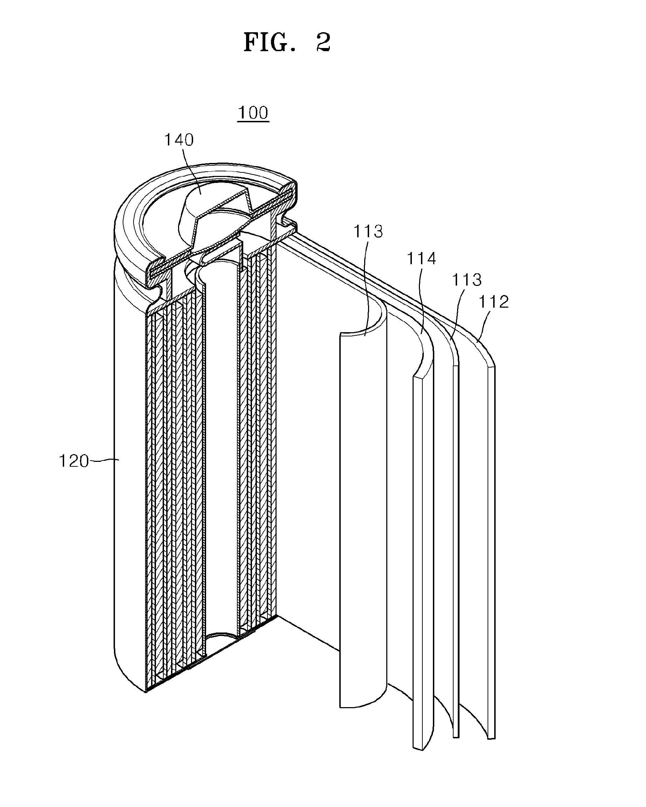

FIG. 2 is an exploded perspective view of a lithium secondary battery 100 according to an aspect of the present invention. Although a view illustrating a configuration of a cylindrical battery is provided in FIG. 2, a battery of the present invention is not limited thereto, and may be formed in a prismatic or pouch shape.

Lithium ion batteries may be classified as lithium ion batteries, lithium ion polymer batteries, and lithium polymer batteries, according to the presence of a separator and the kind of electrolyte used in the batteries. The lithium ion batteries may have a variety of shapes and sizes, include cylindrical, prismatic, coin-type, or pouch-type batteries, and may be bulky or thin film batteries in size. Structures and manufacturing methods of lithium ion batteries are known in the art. The shape of a lithium secondary battery according to embodiments of the present invention is not specifically limited, and a detailed description of structures and manufacturing methods of these batteries will be omitted because they are known in the art.

Referring to FIG. 2, this exemplary lithium ion battery 100 is cylindrical and configured to include as main parts: a negative electrode 112; a positive electrode 114; a separator 113 disposed between the negative electrode 112 and the positive electrode 114; an electrolyte (not shown) impregnating the negative electrode 112, the positive electrode 114, and the separator 113; a battery case 120; and a sealing member 140 sealing the battery case 120. In the lithium secondary battery 100, the negative electrode 112, the positive electrode 114, and the separator 113 are sequentially stacked, spirally wound, and placed in the battery case 120.

The negative electrode 112 includes a collector and a negative electrode active material layer disposed on the collector, wherein the negative electrode active material layer includes a negative electrode active material.

The collector to be used for the negative electrode may be copper, nickel or an SUS collector according to the voltage region, and for example, may be a copper collector.

The negative electrode active material is not specifically limited as long as it is generally used in the art. However, more specifically, a lithium metal, a metal material alloyable with lithium, a transition metal oxide, a material capable of doping and undoping lithium, or a material capable of reversibly intercalating or deintercalating lithium ions, and the like may be used.

The negative electrode active material layer may include a negative electrode active material of at least one metal selected from the group consisting of, for example, lithium metal oran alloy of lithium and aluminum, tin, magnesium, indium, calcium, titanium, and vanadium.

Specific examples of the transition metal oxide are vanadium oxide, lithium vanadium oxide, and the like, and the exemplary materials capable of doping and undoping lithium are Si, SiOₓ (0 < x < 2), Si-T alloy (where T is an element selected from the group consisting of an alkali metal, an alkaline earth metal, a group 13 element, a group 14 element, a transition element, and a rare earth element, or combinations thereof, and is not Si), Sn, SnO₂, Sn-Z (where Z is an element selected from the group consisting of an alkali metal, an alkaline earth metal, a group 13 element, a group 14 element, a transition element, and a rare earth element, or combinations thereof, and is not Sn), and the like. In addition, at least one of these materials may be mixed with SiO₂. The elements T and Z may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

Any carbon-based negative active material generally used in a lithium ion secondary battery may be used as the material capable of reversibly intercalating or deintercalating lithium ions, and examples thereof include crystalline carbon, amorphous carbon, or mixtures thereof. The exemplary crystalline carbon may be amorphous, plate, flake, spherical, or graphite such as fiber natural graphite or artificial graphite. The exemplary amorphous carbon may be soft carbon (low-temperature sintered carbon), hard carbon, mesophase pitch carbide, sintered coke, and the like.

An organic-inorganic hybrid protective layer disposed on the negative electrode active material layer is included, and the lithium ion conductivity of a polymer included in the organic-inorganic hybrid protective layer may be about 10⁻⁴ S/cmor less.
When an organic-inorganic hybrid protective layer disposed on the negative electrode active material layer is included, the small number of permeable pores may be filled with a polymer to inhibit the permeation of impurities through pores and cracks, compared to the case where a ceramic-based inorganic protective layer is included.

The lithium ion conductivity of the polymer included in the organic-inorganic hybrid protective layer may be about 10⁻⁴ S/cm or less, for example, about 10⁻³⁰ S/cm to about 10⁻⁴ S/cm, for example, about 10⁻¹⁵ S/cm to about 10⁻⁵ S/cm, and for example, about 10⁻¹⁵ S/cm to about 10⁻⁶ S/cm.

When the lithium ion conductivity of the polymer is in these ranges, the permeation of impurities through pores and cracks may be inhibited.

However, when there is a multi-layer structure in which a polymer layer is disposed between a ceramic-based inorganic protective layer and liquid electrolyte, lithium ions may be easily transferred between the liquid electrolyte and the inorganic protective layer during charging and discharging, and thus, the lithium ion conductivity of the polymer layer included in a multi-layer structure may be higher than that of the polymer included in the organic-inorganic hybrid protective layer.

The organic-inorganic hybrid protective layer may include a lithium ion conductive porous ceramic; and a polymer.

The polymer may be chemically bonded to at least one portion of the ceramic pores to form a chemically stable and mechanically strong protective layer.

The chemical bond may include, for example, a structure represented by the following general formulas (1) to (3).

-P-O- (1)

-CH₂-O- (2)

-P-O-CH₂- (3)

The chemical bond may be formed by a dipole-dipole interaction. For example, a structure presented by the general formula (3) may be formed when an oxygen atom of -P-O-, which may be present on the surface of a lithium ion conductive porous ceramic and has a high electronegativity, attacks a carbon atom with a low electronegativity in an epoxy group included in an epoxy resin. The structure may also include a structure represented by the general formulas (1) and (2).

In addition, the chemical bond which is present in at least one portion of the polymer and the ceramic pores may be a hydrogen bond. For example, a hydrogen-mediated hydrogen bond may be formed between an oxygen atom of -P-O-, which may be present on the surface of a lithium ion conductive porous ceramic, and nitrogen and oxygen atoms included in an epoxy resin.

The organic-inorganic hybrid protective layer may have a polymer disposed inside a framework consisting of a lithium ion conductive porous ceramic.

The framework may be formed as a single-body.

The organic-inorganic hybrid protective layer may have a polymer disposed inside a framework consisting of a lithium ion conductive porous ceramic, and the framework may be formed as a single-body to inhibit permeation of electrolyte or impurities effectively.
The polymer may be a thermosetting resin.
The polymer includes at least one resin selected from the group consisting of an epoxy resin that is the polymerization product of 1,3-phenylenediamine and 2,2-bis(4-glycidyloxyphenyl)propane or of 1,4-diaminobutane and 2,2-bis(4-glycidyloxyphenyl)propane.

The polymer may be included in the organic-inorganic hybrid protective layer to form a protective layer with a high density due to a decrease in volume during polymerization of the polymer.

However, a polymer included in a multi-layer structure, in which a polymer layer is disposed between a ceramic-based inorganic protective layer and liquid electrolyte, is a polymer in which a polymer layer is disposed adjacent to the electrolyte interface to have flexible properties.

The polymer may be present in an amount of about 0.01 to about 20 parts by weight based on 100 parts by weight of the organic-inorganic hybrid protective layer, and for example, in an amount of about 0.01 to about 10 parts by weight.

When the amount of the polymer is present within these ranges, an organic-inorganic hybrid protective layer including the polymer may inhibit permeation of liquid components in electrolyte or impurities, and lithium ion conductivity may be also maintained in a lithium secondary battery employing a negative electrode including the same.

The lithium ion conductive porous ceramic may include at least one ceramic selected from the group consisting of a LISICON structure, a perovskite structure, and a garnet structure.

The lithium ion conductive porous ceramic allows lithium ions to pass through, and may be included in an organic-inorganic hybrid protective layer disposed on a negative electrode active material layer to prevent a positive electrode or electrolyte components from reacting with a negative electrolyte and to prevent an electrical short with the positive electrode even though dendrites are formed on the surface of the negative electrode.

When the chemical stability of the lithium ion conductive porous ceramic is considered, the lithium ion conductive porous ceramic may include at least one compound selected from the group consisting of, for example, Chemical Formulae 1 through 7. However, it is not limited thereto, and all the lithium ion conductive porous ceramics of a LISICON structure, a perovskite structure, or a garnet structure are possible.

<Chemical Formula 1> Li₁₋ₓAlₓTi₂₋ₓM_{α} (PO_{4+β})₃

wherein 0< x <0.5, 0≤ α ≤ 0.1, 0 ≤ β ≤ 0.1, and M is Zr, Hf, or Rf.

<Chemical Formula 2> Li_{1+x+4y}AlₓTi_{1-x-y} (PO₄)₃

wherein 0 < x < 0.5 and 0 < y < 0.5.

<Chemical Formula 3> Li_{1+x+4y}AlₓTi₂₋ₓSi_{y}P_{3-y}O₁₂

wherein 0 ≤ x ≤ 1 and 0 ≤ y ≤ 1.

<Chemical Formula 4> Li₂₊₂ₓZn₁₋ₓGeO₄

wherein -0.3 < x < 0.9.

<Chemical Formula 5> (LiₓC_{y})D_{z}O₃

wherein the average oxidation number of D is 5 when that of LiₓC_{y} is 1, C is an alkali metal element, and 0 ≤ x ≤ 1, 0 ≤ y ≤ 1, and 0.5 ≤ z ≤ 1.5;
the average oxidation number of D is 4 when that of LiₓC_{y} is 2, C is an alkaline earth metal element or Pb, and 0 ≤ x ≤ 1.5, 0 ≤ y ≤ 1.2, and 0.5 ≤ z ≤ 1.5;
the average oxidation number of D is 3 when that of LiₓC_{y} is 3, C is a lanthanum metal element, and 0 ≤ x ≤ 1.5, 0 ≤ y ≤ 1.2, and 0.5 ≤ z ≤ 1.5; and
D is at least one metal selected from the group consisting of Al, Co, W, Mo, Sn, Si, Mn, Ni, Ti, Zr, Ga, Nb, and Ta.

<Chemical Formula 6> X₃Z₂(TO₄)₃

wherein X is Ca, Fe, or Mg;Z is Fe, Al, or Cr ;and T is Si, As, Ge, Ga, Al, V, or Fe.

<Chemical Formula 7> AₓB_{y}C_{z}O₁₂

wherein 5 < x < 12, 2.5 < y < 3.5, and 1.5 < z < 2.5; A is an alkali metal; B is at least one metal selected from the group consisting of Ca, Sr, Ba, and La,; and C is at least one metal selected from the group consisting of Nb, Zr, and Ta.
The organic-inorganic hybrid protective layer may have a thickness of about 100 nm to about 500 µm, for example, about 1 µm to about 300 µm, and for example, about 10 µm to about 280 µm.

When the organic-inorganic hybrid protective layer has a thickness within these ranges, the permeation of liquid components in electrolyte or impurities may be inhibited and lithium ion conductivity is maintained to provide a lithium secondary battery with improved stability.

A lithium ion conductive intermediate layer may be further included between the negative electrode active material layer and the organic-inorganic hybrid protective layer.

The lithium ion conductive intermediate layer may include, for example, at least one material selected from the group consisting of a lithium ion conductive liquid electrolyte, a polymer electrolyte, and a gel electrolyte.

The lithium ion conductive intermediate layer may function to facilitate the movement of lithium ions between the negative electrode active material layer and the organic-inorganic hybrid protective layer.

The lithium ion conductive liquid electrolyte may be, for example, a non-aqueous electrolyte. The non-aqueous electrolyte may be an organic solvent which does not include water, and the non-aqueous electrolyte may include a carbonate-based solvent, an ester-based solvent, an ether-based solvent, a ketone-based solvent, an organosulfur solvent, an organophosphorus solvent, or an aprotic solvent.

The negative electrode active material layer also includes a binder, and optionally may further include a conducting material.

The binder may help negative electrode active material particles adhere to each other, and may also help the negative electrode active material to adhere to a current collector. Exemplary materials of the binder may include polyvinyl alcohol, carboxymethyl cellulose, hydroxypropyl cellulose, diacetylcellulose, polyvinyl chloride, carboxylated polyvinylchloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but they are not limited thereto.

The conducting material may provide conductivity to electrodes, and may be any suitable electron conducting material that does not cause any chemical change in a battery. Exemplary conducting materials may be a carbonaceous material such as natural graphite, artificial graphite, carbon black, acetylene black, or carbon fiber; a metal such as copper, nickel, aluminum, silver, and the like, each of which may be used in powder or fiber form, a conductive polymer such as a polyphenylene derivative and the like. Exemplary collectors may be copper foil, nickel foil, stainless steel foil, titanium foil, nickel foam, copper foam, a polymer substrate coated with conductive metal, or combinations thereof.

Then, the negative electrode active material, binder, and conducting material may be used at a level typically used in a lithium secondary battery. For example, the weight ratio of the negative electrode active material weight to a mixing weight of the conducting material and binder may be about 98:2 to about 92:8. The mixture ratio of the conducting material to the binder may be about 1: 1.5 to 3, but it is not limited thereto.

The positive electrode 114 includes a current collector and a positive electrode active material formed in the current collector.

Al may be used as the current collector, but it is not limited thereto.

The positive electrode active material is not specifically limited as long as it is generally used in the art. More specifically, a compound capable of reversibly intercalating and deintercalating lithium ions may be used. Specifically, at least one of complex oxides of lithium and a metal selected from the group consisting of cobalt, manganese, nickel, and combinations thereof may be used, and specific examples thereof include a compound represented by any one of the following formulae: LiₐA_{1-b}X_{b}D₂ (where 0.90 ≤ a ≤ 1.8 and 0 ≤ b ≤ 0.5); LiₐE_{1-b}X_{b}O_{2-c}D_{c} (where 0.90 ≤ a ≤ 1.8, 0 ≤ b ≤ 0.5, and 0 ≤ c ≤ 0.05); LiE_{2-b}X_{b}O_{4-c}D_{c} (where 0 ≤ b ≤ 0.5, and 0 ≤ c ≤ 0.05); LiₐNi_{1-b-c}Co_{b}B_{c}D_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}B_{c}O_{2-α}F_{α} (where 0.90 ≤ a ≤ 1.8, 0 ≤ b ≤ 0.5, 0 ≤ c ≤ 0.05, and 0 < α < 2); LiₐNi_{1-b-c}Co_{b}B_{c}O₂₋ₐF₂ (where 0.90 ≤ a ≤ 1.8, 0 ≤ b ≤ 0.5, 0 ≤ c ≤ 0.05, and 0 < α < 2); LiₐNi_{1-b-c}Mn_{b}B_{c}Dₐ (where 0.90 ≤ a ≤ 1.8, 0 ≤ b ≤ 0.5, 0 ≤ c ≤ 0.05, and 0 < α ≤ 2); LiₐNi_{1-b-c}Mn_{b}B_{c}O_{2-α}F_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}B_{c}O_{2-α}F₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiₐNiG_{b}O₂ (where 0.90 ≤ α ≤ 1.8, and 0.001 ≤ b ≤ 0.1); LiₐCoG_{b}O₂ (where 0.90 ≤ a ≤ 1.8, and 0.001 ≤ b ≤ 0.1); LiₐMnG_{b}O₂ (where 0.90 ≤ a ≤ 1.8, and 0.001 ≤ b ≤ 0.1); LiₐMn₂G_{b}O₄ (where 0.90 ≤ a ≤ 1.8, and 0.001 ≤ b ≤ 0.1); QO₂; QS₂; LiQS₂; V₂O₅; LiV₂O₅; LilO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

Exemplary positive electrode active materials are LiMn₂O₄, LiN₂O₄, LiCoO₂, LiNiO₂, LiMnO₂, Li₂MnO₃, LiFePO₄, LiNiₓCo_{y}O₂ (0 < x ≤ 0.15, 0 < y ≤ 0.85), and the like.

In the chemical formula just above, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Compounds having a coating layer on their surface may be also used, and mixtures of the compounds and compounds having a coating layer may be used. The coating layer may include oxide of a coating element, hydroxide of a coating element, oxyhydroxide of a coating element, oxycarbonate of a coating element, and hydroxycarbonate of a coating element, and the like. The material for forming a coating layer may be amorphous or crystalline. The coating element included in the coating layer may include Mg, Al, Co, K, Na, Ca, Si, Ti, V, Sn, Ge, Ga, B, As, Zr, or mixtures thereof.

The coating layer may be formed into a compound using these elements according to any suitable method that does not affect the properties of the positive electrode active material. For example, the coating layer may be formed by using a spray coating method or an immersion coating method, which are well known to those of ordinary skill in the art and thus its detailed description will be omitted herein.

The positive electrode active material layer may include a binder and a conducting material.

The binder may help positive electrode active material particles adhere to each other, and may also help the positive electrode active material to adhere to a current collector. An exemplary binder may be polyvinyl alcohol, carboxymethyl cellulose, hydroxypropyl cellulose, diacetylcellulose, polyvinyl chloride, carboxylated polyvinylchloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but is not limited thereto.
The conducting material may provide conductivity to electrodes, and may be any suitable electron conducting material that does not cause any chemical change in a battery. An exemplary conducting material may be a carbonaceous material such as natural graphite, artificial graphite, carbon black, acetylene black, or carbon fiber; a metal such as copper, nickel, aluminum, silver, and the like, each of which may be used in powder or fiber form, a conductive polymer such as a polyphenylene derivative and the like.

Then, the positive electrode active material, binder, and conducting material may be used at a level typically used in a lithium secondary battery. For example, the weight ratio of the positive electrode active material weight to a mixing weight of the conducting material and binder may be about 98:2 to about 92:8. The mixture ratio of the conducting material to the binder may be about 1: 1.5 to 3, but it is not limited thereto.

The negative electrode 112 and the positive electrode 114 may be manufactured by mixing each electrode active material, the conducting material, and the binder in a solvent to prepare an active material composition. Then, the active material composition may be coated on the current collector. Such a method of manufacturing the electrodes is known in the art and thus its detailed description will be omitted herein. The solvent may include N-methylpyrrolidone, but is not limited thereto.

According to the type of the lithium battery, a separator 113 may be disposed between the positive electrode and the negative electrode. The separator 113 may be a multi-layer separator with two layers or more including polyethylene, polypropylene, polyvinylidene fluoride, or combinations thereof. The separator 113 may also be a mixed multi-layer separator, such as a double-layer separator of polyethylene/polypropylene, a three-layer separator of polyethylene/polypropylene/polyethylene, a three-layer separator of polypropylene/polyethylene/polypropylene, and the like.

Another aspect of the present invention provides a lithium air battery including a positive electrode using oxygen as a positive electrode active material; an aqueous or non-aqueous electrolyte; and the negative electrode 112 described above.

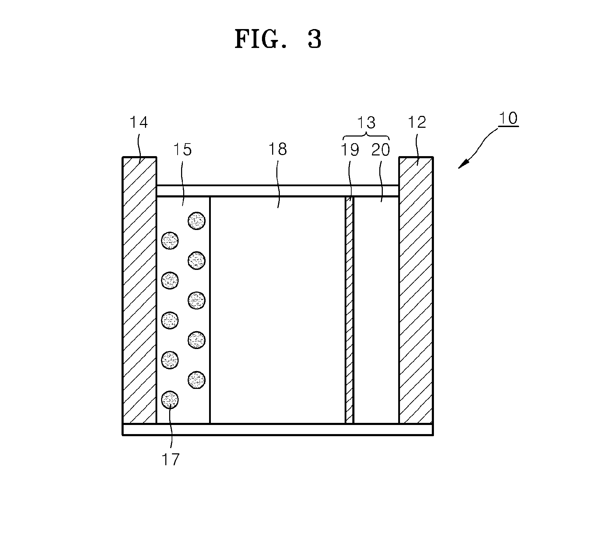

FIG. 3 is a schematic view of a lithium air battery10 according to an embodiment of the present invention. Referring to FIG. 3, an electrolyte 18 is included between a negative electrode 13, which includes a negative electrode active material layer 20, which is capable of absorbing and releasing lithium ions and adjacent to a first collector 12, and an organic-inorganic hybrid protective layer 19 disposed on the negative electrode active material layer 20, and a positive electrode 15 using oxygen formed on a second collector 14 as an active material, wherein an oxidation-reduction catalyst 17 using oxygen as an active material is included in the positive electrode 15. A separator (not shown) may be disposed between the organic-inorganic hybrid protective layer 19 and the electrolyte 18.

The first collector 12 is porous and acts as a gas diffusion layer which allows air to be diffused. The collector is not specifically limited as long as it has conductivity. For example, examples of the collector may be copper, stainless steel, nickel, and the like. The first collector 12 may be in the form of, for example, foil, plate, mesh, and grid.
The negative electrode active material layer 20, which is capable of absorbing and releasing lithium ions, may include a negative electrode active material such as a lithium metal, a lithium metal-based alloy, or a lithium intercalating compound.

The negative electrode active material layer 20 may include, for example, a negative electrode active material of at least one metal selected from the group consisting of lithium metal or an alloy of lithium and aluminum, tin, magnesium, indium, calcium, titanium, and vanadium.

The negative electrode 13 includes the organic-inorganic hybrid protective layer 19 disposed on a negative electrode active material layer, and lithium ion conductivity of a polymer included in the organic-inorganic hybrid protective layer 19 may be about 10⁻⁴ S/cm or less.

When the negative electrode 13 includes the organic-inorganic hybrid protective layer 19 disposed on the negative electrode active material, a small number of permeable pores may be filled with a polymer to inhibit the permeation of impurities through pores and cracks, compared to the case where a ceramic-based inorganic protective layer is included.

The lithium ion conductivity of the polymer included in the organic-inorganic hybrid protective layer 19 may be about 10⁻⁴ S/cm or less, for example, about 10⁻³⁰ S/cm to about 10⁻⁴ S/cm, for example, about 10⁻¹⁵ S/cm to about 10⁻⁵ S/cm, and for example, about 10⁻¹⁵ S/cm to about 10⁻⁶ S/cm.

When the lithium ion conductivity of the polymer is within these ranges, the permeation of impurities through pores and cracks may be inhibited.

However, when a polymer layer disposed between a ceramic-based inorganic protective layer and liquid electrolyte has a multi-layer structure, lithium ions may be easily transferred between the liquid electrolyte and the inorganic protective layer during charging and discharging and thus the lithium ion conductivity of a polymer layer included in a multi-layer structure may be higher than that of the polymer included in the organic-inorganic hybrid protective layer 19.

The organic-inorganic hybrid protective layer 19 may include a lithium ion conductive porous ceramic and a polymer.

The polymer may be chemically bonded to at least one portion of the ceramic pores to form a chemically stable and strong protective layer.

The chemical bond may include, for example, a structure represented by the following general formulas (1) to (3).

-P-O- (1)

-CH₂-O- (2)

-P-O-CH₂- (3)

The chemical bond may be formed by dipole-dipole interaction. For example, a structure presented by the general formula (3) may be formed when an oxygen atom of -P-O-, which may be present on the surface of a lithium ion conductive porous ceramic and has a high electronegativity, attacks a carbon atom with a low electronegativity in an epoxy group included in an epoxy resin. The structure may also include a structure represented by the general formulas (1) and (2).

In addition, the chemical bond which is present in at least one portion of the polymer and the ceramic pores may be a hydrogen bond. For example, a hydrogen-mediated hydrogen bond may be formed between an oxygen atom of -P-O-, which may be present on the surface of a lithium ion conductive porous ceramic, and nitrogen and oxygen atoms included in an epoxy resin.

The organic-inorganic hybrid protective layer 19 may have a polymer disposed inside a framework consisting of a lithium ion conductive porous ceramic.

The framework may be formed as a single-body.

The organic-inorganic hybrid protective layer 19 may have a polymer disposed inside a framework consisting of a lithium ion conductive porous ceramic, and the framework may be formed as a single-body to inhibit permeation of liquid components in electrolyte or impurities effectively.

The polymer may be a thermosetting resin.

The polymer may include at least one selected from the group consisting of an epoxy resin that is the polymerization product of 1,3-phenylenediamine and 2,2-bis(4-glycidyloxyphenyl)propane or of 1,4-diaminobutane and 2,2-bis(4-glycidyloxyphenyl)propane.

The polymer may be included in the organic-inorganic hybrid protective layer 19 to form a protective layer with a high density due to a decrease in volume during polymerization of the polymer.

However, a polymer included in a multi-layer structure, in which a polymer layer is disposed between a ceramic-based inorganic protective layer and liquid electrolyte, is a polymer in which the polymer layer is disposed adjacent to the electrolyte interface to have flexible properties.

The polymer may be present in an amount of about 0.01 to about 20 parts by weight based on 100 parts by weight of the organic-inorganic hybrid protective layer 19, and for example, in an amount of about 0.01 to about 10 parts by weight.

When the amount of the polymer is present within these ranges, an organic-inorganic hybrid protective layer including the polymer may inhibit permeation of liquid components in electrolyte or impurities, and lithium ion conductivity may be also maintained in a lithium air battery employing a negative electrode including the same.

The lithium ion conductive porous ceramic allows lithium ions to pass through, and may be included in an organic-inorganic hybrid protective layer 19 disposed on a negative electrode active material layer to prevent a positive electrode or electrolyte components from reacting with a negative electrolyte and to prevent an electrical short with the positive electrode even though dendrites are formed on the surface of the negative electrode.

When the chemical stability of the lithium ion conductive porous ceramic is considered, the lithium ion conductive porous ceramic may include at least one compound selected from the group consisting of, for example, Chemical Formulae 1 through 7. However, it is not limited thereto, and all the lithium ion conductive porous ceramics of a LISICON structure, a perovskite structure, or a garnet structure are possible.

<Chemical Formula 1> Li₁₊ₓAlₓTi₂₋ₓM_{α} (PO_{4+β})₃

wherein 0< x <0.5, 0≤ α ≤ 0.1, 0 ≤ β ≤ 0.1, and M is Zr, Hf, or Rf.

<Chemical Formula 2> Li_{1+x+4y}AlₓTi_{1-x-y} (PO₄)₃

wherein 0 < x < 0.5 and 0 < y < 0.5.

<Chemical Formula 3> Li_{1+x+4y}AlₓTi₂₋ₓSi_{y}P_{3-y}O₁₂

wherein 0 ≤ x ≤ 1 and 0 ≤ y ≤ 1.

<Chemical Formula 4> Li₂₊₂ₓZn₁₋ₓGeO₄

wherein -0.3 < x < 0.9.

<Chemical Formula 5> (LiₓC_{y})D_{z}O₃

wherein the average oxidation number of D is 5 when that of LiₓC_{y} is 1, C is an alkali metal element, and 0 ≤ x ≤ 1, 0 ≤ y ≤ 1, and 0.5 ≤ z ≤ 1.5;
the average oxidation number of D is 4 when that of LiₓC_{y} is 2, C is an alkaline earth metal element or Pb, and 0 ≤ x ≤ 1.5, 0 ≤ y ≤ 1.2, and 0.5 ≤ z ≤ 1.5;
the average oxidation number of D is 3 when that of LiₓC_{y} is 3, C is a lanthanum metal element or Pb, and 0 ≤ x ≤ 1.5, 0 ≤ y ≤ 1.2, and 0.5 ≤ z ≤ 1.5; and
D is at least one metal selected from the group consisting of Al, Co, W, Mo, Sn, Si, Mn, Ni, Ti, Zr, Ga, Nb, and Ta.

<Chemical Formula 6> X₃Z₂(TO₄)₃

wherein X is Ca, Fe, or Mg; Z is Fe, Al, or Cr; and T is Si, As, Ge, Ga, Al, V, or Fe.

<Chemical Formula 7> AₓB_{y}C_{z}O₁₂

wherein 5 < x < 12, 2.5 < y < 3.5, and 1.5 < z < 2.5; A is an alkali metal; B is at least one metal selected from the group consisting of Ca, Sr, Ba, and La; and C is at least one metal selected from the group consisting of Nb, Zr, and Ta.
The organic-inorganic hybrid protective layer may have a thickness of about 100 nm to about 500 µm, for example, about 1 µm to about 300 µm, and for example, about 10 µm to about 280 µm.

When the organic-inorganic hybrid protective layer 19 has a thickness within these ranges, the permeation of liquid components in electrolyte or impurities may be inhibited and lithium ion conductivity is maintained to provide the lithium air battery 10 with improved stability.

The negative electrode 13 may also include a binder. The exemplary of the binder may be polyvinylidene fluoride (PVdF), polytetrafluoroethylene (PTFE), and the like. The content of the binder is not specifically limited, and may be, for example, about 30% or less by weight, and more specifically, about 1% to about 10% by weight.

The second collector 14 is porous and acts as a gas diffusion layer which allows air to be diffused. The collector is not specifically limited as long as it has conductivity. For example, examples of the collector may be stainless steel, nickel, aluminum, iron, titanium, carbon, and the like. The second collector 14 may be in the form of, for example, foil, plate, mesh, and grid, and more specifically in the form of mesh. The current collecting efficiency of the collector is excellent and appropriate when it is in the form of mesh.

An oxidation-reduction catalyst 17 of oxygen may be included in the positive electrode 15 using oxygen as an active material. For example, manganese oxides including manganese dioxide (MnO₂) and a transition metal may be included, but it is not limited thereto.

The transition metal includes at least one of, for example, Zn, Co, Fe, Cu, and Ni, but it is not limited thereto. All the transition metals may be used as oxidation reduction catalysts.
In addition to the oxidation reduction catalyst 17, WC or WC fused cobalt, CoWO₄, FeWO₄, NiS, and WS₂ may be included. For example, La₂O, Ag₂O, Ag, perovskite, or spinel may be included. A spinel is a group of oxides represented by the general formula AB₂O₄ (where A is a divalent metal ion, such as magnesium, iron, nickel, manganese, and/or zinc, and B is a trivalent metal ion, such as aluminum, iron, chromium, and/or manganese). A perovskite is a group of oxides represented by the general formula AXO₃ (where A is a metal ion, such as cerium, calcium, sodium, strontium, lead (Pb), and/or a metal ion including various rare earth metals; and X is a metal, such as titanium, niobium, and/or iron. All the component elements in the groups have a basic structure identical to that of XO₃ atoms that form a structure of an interconnected octahedron.

The positive electrode 15 using oxygen as an active material may also include a binder. The type and amount of the binder are as described above, and thus its description will be omitted herein.

The electrolyte 18 may be aqueous or non-aqueous. The non-aqueous electrolyte may be an organic solvent, which does not include water, and the non-aqueous electrolyte may include a carbonate-based solvent, an ester-based solvent, an ether-based solvent, a ketone-based solvent, an organosulfur solvent, an organophosphorus solvent, or an aprotic solvent may be used as a non-aqueous organic solvent.

The carbonate-based solvent may include dimethyl carbonate (DMC), diethyl carbonate (DEC), ethyl methyl carbonate (also known as methyl ethyl carbonate, MEC, or EMC), di n-propyl carbonate (DPC), methyl n-propyl carbonate (MPC), ethyl propyl carbonate (EPC), ethylene carbonate (EC), propylene carbonate (PC), fluoroethylene carbonate (FEC), butylene carbonate (BC), and the like, and the ester-based solvent may include methyl acetate, ethyl acetate, n-propyl acetate, tert-butyl acetate, methyl n-propionate, ethyl n-propionate, γ - butyrolactone, 5-decanolide, γ-valerolactone, *dl*-mevalonolactone, γ-caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone, and the like. In addition, the organosulfur and organophosphorus solvents solvent may include methanesulfonyl chloride, p-trichloro-n-dichlorophosphorylmonophosphazene, and the like, and the aprotic solvent may include nitriles such as R-CN (R is a linear, branched or cyclic C2 to C20 hydrocarbon group and may include a double bond aromatic ring or an ether bond), amides such as dimethylformamide, and the like, dioxolane sulfolanes such as 1,3-dioxolane, and the like.

The non-aqueous organic solvents may be used alone or in combination. If one or more are used in combination, a mixture ratio may be appropriately controlled according to a desired battery performance, which may be apparent to those of ordinary skill in the art.

The non-aqueous organic solvent may include a lithium salt, and the lithium salt may be dissolved in an organic solvent to act as a supplier of lithium ions in a battery. For example, the lithium salt may function to facilitate the movement of lithium ions between the negative electrode and the lithium ion conductive solid electrolyte film. The lithium salt may include one or two selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiF, LiBr, LiCl, Lil, and LiB(C₂O₄)₂(lithium bis(oxalato) borate; LiBOB). A concentration of the lithium salt may be about 0.1 M to about 2.0 M. When the concentration of the lithium salt is within this range, the electrolyte has appropriate conductivity and viscosity and thus has excellent electrolyte performance and lithium ions may move efficiently. In addition to the lithium salt, the non-aqueous organic solvent may further include other metal salts, for example, AlCl₃, MgCl₂, NaCl, KCl, NaBr, KBr, CaCl₂, and the like.

In addition, a separator (not shown) may be disposed between the organic-inorganic hybrid protective layer 19 and the electrolyte 18. Any material may be used as long as it may have a composition enough to withstand the use range of a lithium air battery. For example, polymer non-woven fabrics, such as non-woven fabrics of polypropylene or of polyphenylene sulfide, and porous films of an olefin-based resin, such as polyethylene or polypropylene, may be used alone or in combinations thereof.

As used herein, the term "air" is not limited to atmospheric air, and may include combinations of air including oxygen or a pure oxygen atmosphere. A comprehensive definition about the term "air" may be applied to all purposes, for example, air batteries, air positive electrodes, and the like.

The lithium air battery 10 may be used all for lithium primary and secondary batteries, and for example, in lithium secondary batteries. In addition, the shape is not specifically limited, and a coin type, a button type, a sheet type, a stacked type, a cylindrical type, a flat type, a square type, and the like, may be cited as examples. In addition, the lithium air battery 10 may be applied as a large battery used for electric vehicles or the like.

Specific examples of the present invention will be described as follows. However, the examples described are only for illustration of the present invention and the present invention is not limited thereto.

In addition, details not described herein are omitted because they can be inferred by those of ordinary skill in the art.

### [Examples]

### (Manufacture of protective layers)

### Example 1: Manufacture of organic-inorganic hybrid protective layer

71.72 g of Li₂CO₃, 127.79 g of TiO₂, 150.05 g of Al(NO₃)₃, and 345.08 g of NH₄H₂PO₄ were ground and mixed in a mortar, and the mixture was heated at about 1100 °C in an electric furnace for 2 hours. Subsequently, 200 mg of the reactant was ground and manufactured into a film with a thickness of about 100 µm by using a doctor blade, and followed by heating again at about 1100°C for 1 hour to manufacture a lithium ion conductive porous ceramic layer. The lithium ion conductive porous ceramic layer was identified as Li₁₊₄Ti_{1.6}Al_{0.4}P₃O₁₂.

100 mg of the lithium ion conductive porous ceramic layer was immersed in about 1 ml of a THF solution including 2.16 mg of 1,3-phenylenediamine and 6.81 mg of 2,2-bis(4-glycidyloxyphenyl)propane, heated at about 80°C under vacuum for 2 hours to remove the solvent, and followed by drying at about 150°C in a vacuum oven for 24 hours to manufacture an organic-inorganic hybrid protective layer.

### Example 2: Manufacture of organic-inorganic hybrid protective layer

1.02 g of Al₂O₃ was added to manufacture a lithium ion conductive porous ceramic layer, and an organic-inorganic hybrid protective layer was manufactured in the same manner as in Example 1, except that the lithium ion conductive porous ceramic was Li_{1.4}Ti_{1.6}Al_{0.4}P₃O_{12.03}.

### Example 3: Manufacture of organic-inorganic hybrid protective layer

1.23 g of ZrO₂ was added to manufacture a lithium ion conductive porous ceramic layer, and an organic-inorganic hybrid protective layer was manufactured in the same manner as in Example 1, except that the lithium ion conductive porous ceramic was Li_{1.4}Ti_{1.6}Al_{0.4}Zr_{0.01}P₃O_{12.01}.

### Comparative Example 1: Manufacture of ceramic-based inorganic protective layer

71.72 g of Li₂CO₃, 127.79 g of TiO₂, 150.05 g of Al(NO₃)₃, and 345.08 g of NH₄H₂PO₄ were ground and mixed in a mortar, and the mixture was heated at about 1100°C in an electric furnace for 2 hours. Subsequently, 200mg of the reactant was ground and manufactured into a film with a thickness of about 100 µm by using a doctor blade, and followed by heating again at about 1100°C for 1 hour to manufacture a lithium ion conductive porous ceramic layer. The lithium ion conductive porous ceramic layer was identified as Li_{1.4}Ti_{1.6}Al_{0.4}P₃O₁₂.

### (Manufacture of negative electrodes for lithium secondary battery)

### Example 4: Manufacture of negative electrode

The organic-inorganic hybrid protective layer manufactured in Example 1, a PP separator, into which a PC solution of 1 M LiTFSI (Celgard, Inc.) was impregnated, lithium with a thickness of about 300 µm, and a Cu collector with a thickness of about 20 µm were packed into an aluminum pouch to manufacture a negative electrode for a lithium secondary battery having a window of the organic-inorganic hybrid protective layer.

### Example 5: Manufacture of positive electrode

A negative electrode for a lithium secondary battery was manufactured in the same manner as in Example 4, except that the organic-inorganic hybrid protective layer manufactured in Example 2 was used instead of the organic-inorganic hybrid protective layer manufactured in Example 1.

### Example 6: Manufacture of negative electrode

A negative electrode for a lithium secondary battery was manufactured in the same manner as in Example 4, except that the organic-inorganic hybrid protective layer manufactured in Example 3 was used instead of the organic-inorganic hybrid protective layer manufactured in Example 1.

### Comparative Example 2: Manufacture of negative electrode

A negative electrode for a lithium secondary battery was manufactured in the same manner as in Example 4, except that the ceramic-based inorganic protective layer manufactured in Comparative Example 1 was used instead of the organic-inorganic hybrid protective layer manufactured in Example 1.

### (Manufacture of lithium secondary batteries)

### Example 7: Manufacture of lithium secondary battery

LiCoO₂ powder as a positive electrode material, a binder in which PVdF was dissolved in an amount of about 5% by weight in N-methylpyrrolidone (NMP), and a conducting material (acetylene black) was added at a weight ratio of 92:4:4 in a mano mortar and mixed to prepare a slurry. The slurry was coated on an aluminum foil with a thickness of about 15 µm by bar-coating. This was placed in an oven at about 90°C, first dried for about 2 hours to evaporate NMP, placed in an oven at about 120°C, and then dried for about 2 hours to evaporate NMP completely. The electrode was rolled and punched to obtain a positive electrode for a coin cell with a thickness of about 60 µm. The capacity of the positive electrode was about 1.7 mAh/cm², and the thickness was about 50 µm to about 60 µm.

The positive electrode with a diameter of about 1.5 cm, a solution in which 1.3 M of LiPF₆ was dissolved in a mixture of EC and DEC (at a ratio of 3:7 by volume) as an electrolyte, a polyethylene separator, and the negative electrode manufactured in Example 4 were used to manufacture a coin cell.

### Example 8: Manufacture of lithium secondary battery

A coin cell was manufactured in the same manner as in Example 7, except that the negative electrode manufactured in Example 5 was used instead of the negative electrode manufactured in Example 4.

### Example 9: Manufacture of lithium secondary battery

A coin cell was manufactured in the same manner as in Example 7, except that the negative electrode manufactured in Example 6 was used instead of the negative electrode manufactured in Example 4.

### Comparative Example 3: Manufacture of lithium secondary battery

A coin cell was manufactured in the same manner as in Example 7, except that the negative electrode manufactured in Comparative Example 2 was used.

### (Manufacture of lithium air batteries)

### Example 10: Manufacture of lithium air battery

The negative electrode manufactured in Example 4 and an ethanol solution in which manganese oxide (MnO₂) was saturated at room temperature were prepared, and a positive electrode, including a carbonaceous material (hereinafter, referred to as 'carbon electrode'. GDL 35BC product from SGL, Inc.), was immersed in the saturated ethanol solution for 5 minutes and then removed. Subsequently, the carbon electrode was immersed in about 0.1 M of a KMnO₄ solution heated to about 75°C, and then maintained in the solution for 5 minutes. Subsequently, the carbon electrode was dried in air at about 80°C for 24 hours, and followed by drying at about 120°C in vacuum for 120 minutes to prepare a positive electrode including manganese oxide as a catalyst. Polypropylene (3501 product from Celgard, Inc.) was used as a separator disposed between the positive electrode and the negative electrode.

The negative electrode was installed in a stainless steel case, and a separator was installed at a side facing the negative electrode. A positive electrode was set on the separator to face the negative electrode. Subsequently, a stainless steel mesh was disposed on the positive electrode, and a cell was fixed thereon by using a pressing member to allow air to be transferred to the positive electrode to manufacture a lithium air battery.

The case may be separated into an upper portion for contacting the negative electrode and a lower portion for contacting the positive electrode, and an insulating resin was included between the upper portion and the lower portion to electrically insulate the positive and negative electrodes.

### Example 11: Manufacture of lithium air battery

A lithium air battery was manufactured in the same manner as in Example 10, except that the negative electrode manufactured in Example 5 was used instead of the negative electrode manufactured in Example 4.

### Example 12: Manufacture of lithium air battery

A lithium air battery was manufactured in the same manner as in Example 10, except that the negative electrode manufactured in Example 6 was used instead of the negative electrode manufactured in Example 4.

### Comparative Example 4: Manufacture of lithium air battery

A lithium air battery was manufactured in the same manner as in Example 10, except that the ceramic-based inorganic protective layer manufactured in Comparative Example 1 was used.

### (Evaluation of protective layer properties)

### Evaluation Example 1: Scanning Electron Microscopy (SEM) of protective layer

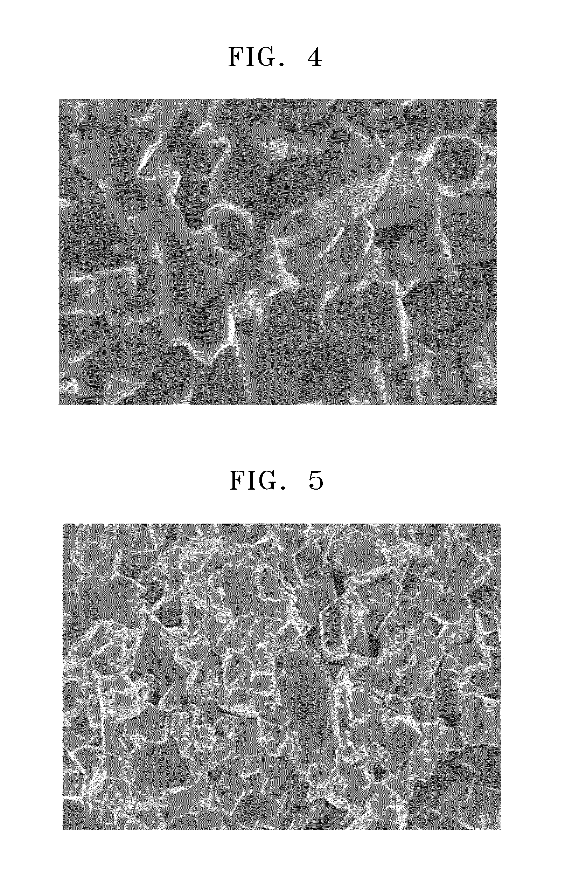

The protective layers manufactured in Example 1 and Comparative Example 1 were photographed by a scanning electron microscope. Measurement results are shown in FIGS. 4 and 5, respectively. As shown in FIGS. 4 and 5, pores and cracks were not found in the organic-inorganic hybrid protective layer in Example 1, compared to Comparative Example 1.

### Evaluation Example 2: Evaluation of lithium ion conductivity of protective layer

Au was thermally deposited on both sides of the protective layers manufactured in Example 1 and Comparative Example 1, and lithium ion conductivity was measured by using an impedance spectrum test device (Electrochemical Impedance Spectroscopy: EIS). The measurement results are shown in the following Table 1.

**[Table 1]**

| Division | Lithium ion conductivity (S/cm) |
|---|---|
| Example 1 | 0.8 x 10⁻⁴ |
| Comparative Example 1 | 0.4 x 10⁻⁴ |

Referring to Table 1, lithium ion conductivities of protective layers in Comparative Example 1 and Example 1 were similar.

### Example 3: Evaluation of negative ion permeability of protective layer

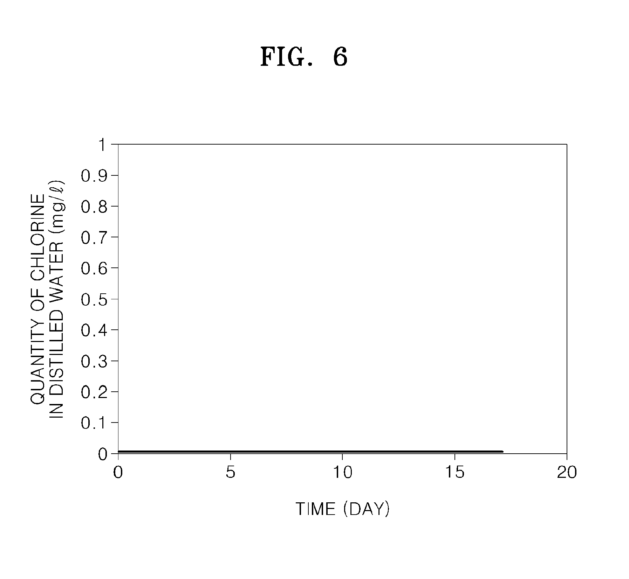

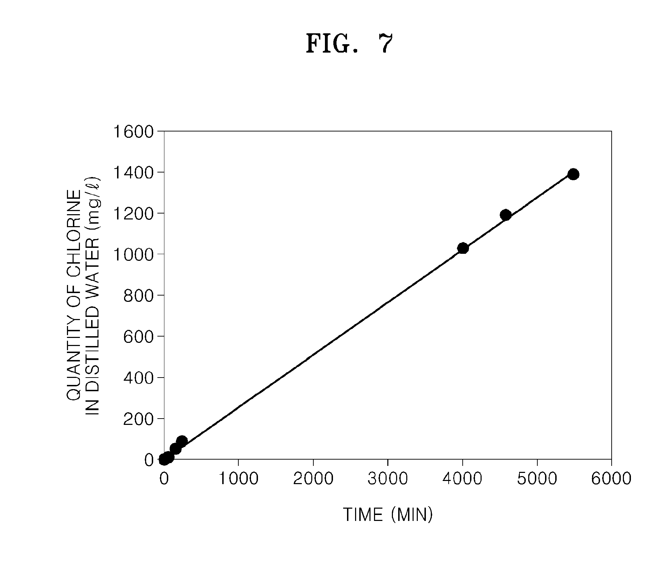

A saturated LiCl solution was placed in one beaker, and water containing a Cl⁻ negative ion selective electrode was placed in the other beaker. A negative ion permeability evaluation device of a beaker cell connected by a tube blocking the protective layers in Example 1 and Comparative Example 1 between the two beakers was manufactured. Results of the negative ion permeability evaluation obtained by using the negative ion permeability evaluation device are shown in FIGS. 6 and 7.

As shown in FIGS. 6 and 7, the protective layer manufactured in Example 1 has significantly improved Cl⁻ negative ion blocking properties, compared to the protective layer manufactured in Comparative Example 1.

According to an aspect of the present invention, the permeation of liquid components in an electrolyte or impurities may be inhibited and lithium ion conductivity of a lithium secondary battery may be maintained by including an organic-inorganic hybrid protective layer disposed on a negative electrode active material layer and a polymer with a lithium ion conductivity of about 10⁻⁴ S/cm or less in the organic-inorganic hybrid protective layer.

Although a few embodiments of the present invention have been shown and described, it would be appreciated by those skilled in the art that changes may be made in this embodiment without departing from the principles of the invention, the scope of which is defined in the appended claims.

## Claims

1. A negative electrode for a lithium secondary battery, comprising:
a collector;
a negative electrode active material layer disposed on the collector; and an organic-inorganic hybrid protective layer disposed on the negative electrode active material layer, **characterized in that** the organic-inorganic hybrid protective layer comprises a lithium ion conductive porous ceramic and a polymer, wherein the polymer is an epoxy resin that is the polymerization product of 1,3-phenylenediamine and 2,2-bis(4-glycidyloxyphenyl)propane or of 1,4-diaminobutane and 2,2-bis(4-glycidyloxyphenyl)propane.

2. The negative electrode of claim 1, wherein the polymer is chemically bonded to at least one portion of pores comprised in the porous ceramic, wherein the chemical bond comprises a structure represented by the following general formulas (1) to (3).
-P-O- (1)
-CH₂-O- (2)
-P-O-CH₂- (3)

3. The negative electrode of claim 1 or 2, wherein the lithium ion conductive porous ceramic is at least one ceramic selected from the group consisting of a Lithium-Super-lon-Conductor (LISICON) structure, a perovskite structure, and a garnet structure.

4. The negative electrode of any of claims 1-3, wherein the lithium ion conductive porous ceramic is at least one compound selected from the group consisting of Chemical Formulae 1 through 7:
<Chemical Formula 1> Li₁₊ₓAlₓTi₂₋ₓM_{α} (PO_{4+β})₃
wherein 0< x <0.5, 0≤ α ≤ 0.1, 0 ≤ β ≤ 0.1, and M is Zr, Hf, or Rf,
<Chemical Formula 2> Li_{1+x+4y}AlₓTi_{1-x-y}(PO₄)₃
wherein 0 < x < 0.5 and 0 < y < 0.5,
<Chemical Formula 3> Li_{1+x+4y}AlₓTi₂₋ₓSi_{y}P_{3-y}O₁₂
wherein 0 ≤ x ≤ 1 and 0 ≤ y ≤ 1,
<Chemical Formula 4> Li₂₊₂ₓZn₁₋ₓGeO₄
wherein -0.3 < x < 0.9,
<Chemical Formula 5> (LiₓC_{y})D_{z}O₃
wherein the average oxidation number of D is 5 when that of LiₓC_{y} is 1, C is an alkali metal element, and 0 ≤ x ≤ 1, 0 ≤ y ≤ 1, and 0.5 ≤ z ≤ 1.5,
the average oxidation number of D is 4 when that of LiₓC_{y} is 2, C is an alkaline earth metal element or Pb, and 0 ≤ x ≤ 1.5, 0 ≤ y ≤ 1.2, and 0.5 ≤ z ≤ 1.5,
the average oxidation number of D is 3 when that of LiₓC_{y} is 3, C is a lanthanum metal element, and 0 ≤ x ≤ 1.5, 0 ≤ y ≤ 1.2, and 0.5 ≤ z ≤ 1.5, and
D is at least one metal selected from the group consisting of Al, Co, W, Mo, Sn, Si, Mn, Ni, Ti, Zr, Ga, Nb, and Ta,
<Chemical Formula 6> X₃Z₂(TO₄)₃
wherein X is Ca, Fe, or Mg; Z is Fe, Al, or Cr; and T is Si, As, Ge, Ga, Al, V, or Fe,
<Chemical Formula 7> AₓB_{y}C_{z}O₁₂
wherein 5 < x < 12, 2.5 < y < 3.5, and 1.5 < z < 2.5, A is an alkali metal; B is at least one metal selected from the group consisting of Ca, Sr, Ba, and La; and C is at least one metal selected from the group consisting of Nb, Zr, and Ta.

5. The negative electrode of any of claims 1-4, further comprising a lithium ion conductive intermediate layer between the negative electrode active material layer and the organic-inorganic hybrid protective layer, wherein the lithium ion conductive intermediate layer includes at least one electrolyte selected from the group consisting of a lithium ion conductive liquid electrolyte, a polymer electrolyte, and a gel electrolyte.

6. A method of manufacturing a negative electrode for a lithium secondary battery, the method comprising:
preparing a lithium ion conductive porous ceramic layer;
injecting a solution comprising a monomer of a thermosetting resin into pores of the lithium ion conductive porous ceramic layer; and
polymerizing the monomer to form an organic-inorganic hybrid protective layer of the lithium ion conductive porous ceramic and a polymer, **characterized in that** the monomer of the thermosetting resin is at least one monomer selected from an epoxy resin monomer of 1,3-phenylenediamine and 2,2-bis(4-glycidyloxyphenyl)propane or an epoxy resin monomer of 1,4-diaminobutane and 2,2-bis(4-glycidyloxyphenyl)propane.

7. The method of claim 6, wherein the preparation of the lithium ion conductive porous ceramic layer comprises:
mixing and sintering a ceramic precursor to obtain a ceramic powder; and
pressurizing and sintering the ceramic powder.

8. The method of claim 7, wherein the ceramic precursor is two or more oxides, nitrates, carbonates, hydroxides, or phosphorus oxides selected from the group consisting of a lithium salt and an alkali metal, an alkaline earth metal, a lanthanum metal, Al, Ga, Zr, Ti, Ge, Co, W, Mo, Si, Sn, Mn, Ni, Fe, Cr, As, Nb, and Ta.

9. The method of claim 7 or 8, wherein the ceramic precursor further comprises NH₄H₂PO₄.

10. The method of any of claims 6-9, wherein the solution comprising the monomer of the thermosetting resin further comprises a cross-linking agent.

11. The method of claim 10, wherein the cross-linking agent is at least one acrylate selected from the group consisting of methyl methacrylate, aryl acrylate, benzyl acrylate, butoxyethyl acrylate, 2-cyanoethyl acrylate, cyclohexyl acrylate, dicyclopentenyl acrylate, N,N-diethylaminoethyl acrylate, 2-ethoxyethyl acrylate, 2-ethylhexyl acrylate, glycerol methacrylate, and glycidyl methacrylate.

12. A lithium secondary battery comprising the negative electrode of any of claims 1-5.

13. A lithium air battery comprising
a positive electrode using oxygen as a positive electrode active material;
an aqueous or non-aqueous electrolyte; and
the negative electrode of any of claims 1-5.

## Patentansprüche

1. Negative Elektrode für eine Lithium-Sekundär-Batterie, die Folgendes beinhaltet:
einen Kollektor;
eine Aktivmaterialschicht der negativen Elektrode, die auf dem Kollektor angeordnet ist; undeine organisch-anorganische hybride Schutzschicht, die auf der
Aktivmaterialschicht der negativen Elektrode angeordnet ist,
**dadurch gekennzeichnet, dass**
die organisch-anorganische hybride Schutzschicht eine Lithiumionen leitende poröse Keramik und ein Polymer beinhaltet, wobei das Polymer ein Epoxidharz ist, das das Polymerisationsprodukt von 1,3-Phenylendiamin und 2,2-Bis(4-glycidyloxyphenyl)propan oder von 1,4-Diaminbutan und 2,2-Bis(4-glycidyloxyphenyl)propan ist.

2. Negative Elektrode gemäß Anspruch 1, wobei das Polymer mindestens an einen Abschnitt von Poren, die in der porösen Keramik beinhaltet sind, chemisch gebunden ist, wobei die chemische Bindung eine Struktur beinhaltet, die durch die folgenden allgemeinen Formeln (1) bis (3) dargestellt wird.
-P-O- (1)
-CH₂-O- (2)
-P-O-CH₂- (3)

3. Negative Elektrode gemäß Anspruch 1 oder 2, wobei die Lithiumionen leitende poröse Keramik mindestens eine Keramik ist, die aus der Gruppe ausgewählt ist, die aus Lithium-Super-Ion-Conductor-Struktur (LISICON-Struktur), einer Perowskitstruktur und einer Granatstruktur besteht.

4. Negative Elektrode gemäß einem der Ansprüche 1-3, wobei die Lithiumionen leitende poröse Keramik mindestens eine Verbindung ist, die aus der Gruppe ausgewählt ist, die aus den chemischen Formeln 1 bis 7 besteht:
<Chemische Formel 1> Li₁₊ₓAlₓTi₂₋ₓM_{α} (PO_{4+β})₃
wobei 0 < x < 0,5, 0 ≤ α ≤ 0,1, 0 ≤ β ≤ 0,1 und M Zr, Hf oder Rf ist,
<Chemische Formel 2> Li_{1+x+4y}AlₓTi_{1-x-y}(PO₄)₃
wobei 0 < x < 0,5 und 0 < y < 0,5,
<Chemische Formel 3> Li_{1+x+4y}AlₓTi₂₋ₓSi_{y}P_{3-y}O₁₂
wobei 0 ≤ x ≤ 1 und 0 ≤ y ≤ 1,
<Chemische Formel 4> Li₂₊₂ₓZn₁₋ₓGeO₄
wobei -0,3 < x < 0,9,
<Chemische Formel 5> (LiₓC_{y})D_{z}O₃
wobei die durchschnittliche Oxidationszahl von D 5 ist, wenn die von LiₓC_{y} 1 ist, C ein Alkalimetallelement ist und 0 ≤ x ≤ 1,0 ≤ y ≤ 1 und 0,5 ≤ z ≤ 1,5,
die durchschnittliche Oxidationszahl von D 4 ist, wenn die von LiₓC_{y} 2 ist, C ein Erdalkalimetallelement oder Pb ist und 0 ≤ x ≤ 1,5, 0 ≤ y ≤ 1,2 und 0,5 ≤ z ≤ 1,5,
die durchschnittliche Oxidationszahl von D 3 ist, wenn die von LiₓC_{y} 3 ist, C ein Lanthanmetallelement ist und 0 ≤ x ≤ 1,5, 0 ≤ y ≤ 1,2 und 0,5 ≤ z ≤ 1,5, und
D mindestens ein Metall ist, das aus der Gruppe ausgewählt ist, die aus Al, Co, W, Mo, Sn, Si, Mn, Ni, Ti, Zr, Ga, Nb und Ta besteht,
<Chemische Formel 6> X₃Z₂(TO₄)₃
wobei X Ca, Fe oder Mg ist; Z Fe, Al oder Cr ist; und T Si, As, Ge, Ga, Al, V oder Fe ist,
<Chemische Formel 7> AₓB_{y}C_{z}O₁₂
wobei 5 < x < 12, 2,5 < y < 3,5 und 1,5 < z < 2,5, A ein Alkalimetall ist; B mindestens ein Metall ist, das aus der Gruppe ausgewählt ist, die aus Ca, Sr, Ba und La besteht; und C mindestens ein Metall ist, das aus der Gruppe ausgewählt ist, die aus Nb, Zr und Ta besteht.

5. Negative Elektrode gemäß einem der Ansprüche 1-4, die ferner eine Lithiumionen leitende Zwischenschicht zwischen der Aktivmaterialschicht und der organisch-anorganische hybride Schutzschicht der negativen Elektrode beinhaltet, wobei die Lithiumionen leitende Zwischenschicht mindestens ein Elektrolyt umfasst, das aus der Gruppe ausgewählt ist, die aus einem Lithiumionen leitenden Flüssigelektrolyt, einem Polymerelektrolyt und einem Gelelektrolyt besteht.

6. Verfahren zum Herstellen einer negativen Elektrode für eine Lithium-Sekundär-Batterie, das Folgendes beinhaltet:
Vorbereiten einer Lithiumionen leitenden porösen Keramikschicht;
Einspritzen einer Lösung, die ein Monomer eines thermohärtenden Harzes beinhaltet, in die Poren der Lithiumionen leitenden porösen Keramikschicht; und
Polymerisieren des Monomers, um eine organisch-anorganische hybride Schutzschicht der Lithiumionen leitenden porösen Keramik und ein Polymer zu bilden,
**dadurch gekennzeichnet, dass**
das Monomer des thermohärtenden Harzes mindestens ein Monomer ist, das aus einem Epoxidharzmonomer von 1,3-Phenylendiamin und 2,2-Bis(4-glycidyloxyphenyl)propan oder einem Epoxidharzmonomer von 1,4-Diaminbutan und 2,2-Bis(4-glycidyloxyphenyl)propan ausgewählt ist.

7. Verfahren gemäß Anspruch 6, wobei die Vorbereitung der Lithiumionen leitenden porösen Keramikschicht Folgendes beinhaltet:
Mischen und Sintern eines keramischen Vorprodukts, um ein keramisches Pulver zu erhalten; und Unterdrucksetzen und Sintern des keramischen Pulvers.

8. Verfahren gemäß Anspruch 7, wobei das keramische Vorprodukt zwei oder mehr Oxide, Nitrate, Carbonate, Hydroxide oder Phosphoroxide ist, die aus der Gruppe ausgewählt sind, die aus Lithiumsalz und einem Alkalimetall, einem Erdalkalimetall, einem Lanthanmetall, Al, Ga, Zr, Ti, Ge, Co, W, Mo, Si, Sn, Mn, Ni, Fe, Cr, As, Nb und Ta besteht.

9. Verfahren gemäß Anspruch 7 oder 8, wobei das keramische Vorprodukt ferner NH₄H₂PO₄ beinhaltet.

10. Verfahren gemäß einem der Ansprüche 6-9, wobei die Lösung, die das Monomer eines thermohärtenden Harzes beinhaltet, ferner ein Vernetzungsmittel beinhaltet.

11. Verfahren gemäß Anspruch 10, wobei das Vernetzungsmittel mindestens ein Acrylat ist, das aus der Gruppe ausgewählt ist, die aus Methylmethacrylat, Arylacrylat, Benzylacrylat, Butoxyethylacrylat, 2-Cyanethylacrylat, Cyclohexylacrylat, Dicyclopentenylacrylat, N,N-Diethylaminoethylacrylat, 2-Ethoxyethylacrylat, 2-Ethylhexylacrylat, Glycerolmethacrylat und Glycidylmethacrylat besteht.

12. Lithium-Sekundär-Batterie, die die negative Elektrode gemäß einem der Ansprüche 1-5 beinhaltet.

13. Lithium-Sekundär-Batterie, die Folgendes beinhaltet:
eine positive Elektrode, die Sauerstoff als Aktivmaterial der positiven Elektrode verwendet;
einen wässrigen oder nicht wässrigen Elektrolyten; und
die negative Elektrode gemäß einem der Ansprüche 1-5.

## Revendications

1. Une électrode négative pour une batterie secondaire au lithium, comprenant :
un collecteur,
une couche de matériau actif d'électrode négative disposée sur le collecteur, et
une couche protectrice hybride organique-inorganique disposée sur la couche de matériau actif d'électrode négative,
**caractérisé en ce que**
la couche protectrice hybride organique-inorganique contient une céramique poreuse conductrice d'ions lithium et un polymère, où le polymère est une résine époxy qui est le produit de polymérisation de 1,3-phénylènediamine et 2,2-bis(4-glycidyloxyphényle)propane ou de 1,4-diaminobutane et 2,2-bis(4-glycidyloxyphényle)propane.

2. L'électrode négative selon la Revendication 1, où le polymère est chimiquement lié à au moins une partie de pores contenue dans la céramique poreuse, où la liaison chimique comprend une structure représentée par les formules générales (1) à (3) suivantes :
-P-O- (1)
-CH₂-O- (2)
-P-O-CH₂- (3)

3. L'électrode négative selon la Revendication 1 ou 2, où la céramique poreuse conductrice d'ions lithium est au moins une céramique sélectionnée dans le groupe se composant d'une structure de conducteur superionique au lithium (LISICON), une structure de pérovskite et une structure de grenat.

4. L'électrode négative selon l'une quelconque des Revendications 1 à 3, où la céramique poreuse conductrice d'ions lithium est au moins un composé sélectionné dans le groupe se composant des formules chimiques 1 à 7 :
<Formule chimique 1 > Li₁₊ₓAlₓTi₂₋ₓM_{α} (PO_{4+β})₃
où 0 < x < 0,5, 0 ≤ α ≤ 0,1, 0 ≤ β ≤ 0,1, et M est Zr, Hf ou Rf,
<Formule chimique 2> Li_{1+x+4y}AlₓTi_{1-x-y}(PO₄)₃
où 0 < x < 0,5 et 0 < y < 0,5,
<Formule chimique 3> Li_{1+x+4y}AlₓTi₂₋ₓSi_{y}P_{3-y}O₁₂
où 0 ≤ x ≤ 1 et 0 ≤ y ≤ 1,
<Formule chimique 4> Li₂₊₂ₓZn₁₋ₓ(GeO₄
où -0,3 < x < 0,9,
<Formule chimique 5> (LiₓC_{y})D_{z}O₃
où le nombre d'oxydation moyen de D est 5 lorsque celui de LiₓC_{y} est 1, C est un élément de métal alcalin, et 0 ≤ x ≤ 1, 0 ≤ y ≤ 1, et 0,5 ≤ z ≤ 1,5,
le nombre d'oxydation moyen de D est 4 lorsque celui de LiₓC_{y} est 2, C est un élément de métal alcalino-terreux ou Pb, et 0 ≤ x ≤ 1,5, 0 ≤ y ≤ 1,2 et 0,5 ≤ z ≤ 1,5,
le nombre d'oxydation moyen de D est 3 lorsque celui de LiₓC_{y} est 3, C est un élément de métal de lanthane, et 0 ≤ x ≤ 1,5, 0 ≤ y ≤ 1,2 et 0,5 ≤ z ≤ 1,5, et
D est au moins un métal sélectionné dans le groupe se composant de Al, Co, W, Mo, Sn, Si, Mn, Ni, Ti, Zr, Ga, Nb et Ta,
<Formule chimique 6> X₃Z₂(TO₄)₃
où X est Ca, Fe ou Mg, Z est Fe, Al ou Cr, et T est Si, As, Ge, Ga, Al, V ou Fe,
<Formule chimique 7> AₓB_{y}C_{z}O₁₂
où 5 < x < 12, 2,5 < y < 3,5, et 1,5 < z < 2,5, A est un métal alcalin, B est au moins un métal sélectionné dans le groupe se composant de Ca, Sr, Ba et La, et C est au moins un métal sélectionné dans le groupe se composant de Nb, Zr et Ta.

5. L'électrode négative selon l'une quelconque des Revendications 1 à 4, comprenant en outre une couche intermédiaire conductrice d'ions lithium entre la couche de matériau actif d'électrode négative et la couche protectrice hybride organique-inorganique, où la couche intermédiaire conductrice d'ions lithium contient au moins un électrolyte sélectionné dans le groupe se composant d'un électrolyte liquide conducteur d'ions lithium, d'un électrolyte polymère et d'un électrolyte sous forme de gel.

6. Un procédé de fabrication d'une électrode négative pour une batterie secondaire au lithium, le procédé comprenant :
la préparation d'une couche de céramique poreuse conductrice d'ions lithium,
l'injection d'une solution contenant un monomère d'une résine thermodurcissable dans des pores de la couche de céramique poreuse conductrice d'ions lithium, et
la polymérisation du monomère de façon à former une couche protectrice hybride organique-inorganique de la céramique poreuse conductrice d'ions lithium et un polymère,
**caractérisé en ce que**
le monomère de la résine thermodurcissable est au moins un monomère sélectionné parmi un monomère de résine époxy de 1,3-phénylènediamine et 2,2-bis(4-glycidyloxyphényle)propane ou un monomère de résine époxy de 1,4-diaminobutane et 2,2-bis(4-glycidyloxyphényle)propane.

7. Le procédé selon la Revendication 6, où la préparation de la couche de céramique poreuse conductrice d'ions lithium comprend :
le mélange et le frittage d'un précurseur céramique de façon à obtenir une poudre céramique, et
la mise sous pression et le frittage de la poudre céramique.

8. Le procédé selon la Revendication 7, où le précurseur céramique est deux ou plus oxydes, nitrates, carbonates, hydroxydes ou oxydes de phosphore sélectionnés dans le groupe se composant d'un sel de lithium et d'un métal alcalin, d'un métal alcalino-terreux, d'un métal de lanthane, Al, Ga, Zr, Ti, Ge, Co, W, Mo, Si, Sn, Mn, Ni, Fe, Cr, As, Nb et Ta.

9. Le procédé selon la Revendication 7 ou 8, où le précurseur céramique contient en outre NH₄H₂PO₄.

10. Le procédé selon l'une quelconque des Revendications 6-9, où la solution contenant le monomère de la résine thermodurcissable contient en outre un agent de réticulation.

11. Le procédé selon la Revendication 10, où l'agent de réticulation est au moins un acrylate sélectionnée dans le groupe se composant de méthacrylate de méthyle, acrylate d'aryle, acrylate de benzyle, acrylate de butoxyéthyle, acrylate de 2-cyanoéthyle, acrylate de cyclohexyle, acrylate de dicyclopentényle, acrylate de N,N-diéthylaminoéthyle, acrylate de 2-éthoxyéthyle, acrylate de 2-éthylhexyle, méthacrylate de glycérol et méthacrylate de glycidyle.

12. Une batterie secondaire au lithium comprenant l'électrode négative selon l'une quelconque des Revendications 1 à 5.

13. Une batterie lithium-air comprenant
une électrode positive utilisant de l'oxygène en tant que matériau d'électrode positive active,
un électrolyte aqueux ou non aqueux, et
l'électrode négative selon l'une quelconque des Revendications 1 à 5.
